# FASCICULE DE BREVET EUROPEEN

(11) **EP 3 391 614 B1**
(45) Date de publication et mention de la délivrance du brevet: **07.06.2023**
(21) Numéro de dépôt: 16826097.4
(22) Date de dépôt: 14.12.2016
(51) Int. Cl.: H04L 9/40

(54) **PROCÉDÉ DE TRANSMISSION D'UNE INFORMATION NUMÉRIQUE**
VERFAHREN ZUM SENDEN VON DIGITALEN INFORMATIONEN
METHOD FOR SENDING DIGITAL INFORMATION

(30) Priorité: 15.12.2015 FR 1562430
(43) Date de publication de la demande: 24.10.2018
(73) Titulaire: Taklane, 50200 Coutances (FR)
(72) Inventeur: BAISNEE, Pascal, 50200 Coutances (FR)
(74) Mandataire: IP Trust
(86) Numéro de dépôt international: PCT/FR2016/053421
(87) Numéro de publication internationale: WO 2017/103472

(56) Documents cités:
- EP-A2- 1 103 935
- US-A1- 2011 219 427
- US-A1- 2013 282 582

## Description

### Domaine de l'invention

La présente invention concerne le domaine des services en ligne accessibles par le réseau Internet. L'accès à des sites ou services distant se fait par établissement d'une session de communication entre un équipement connecté, par exemple un ordinateur, une tablette ou un téléphone cellulaire, et un serveur dont l'utilisateur connaît l'adresse et la saisie dans un navigateur, ou auquel l'utilisateur accède via un moteur de recherche ou encore par un lien transmis par un message électronique ou apparaissant sur la page d'un autre site.

A partir de la page visualisée, il procède ensuite à des transactions, qui peuvent concerner des questions sensibles, telles que la fourniture d'informations confidentielles, d'engagements ou le paiement en ligne.

Le développement de ces moyens transactionnels a malheureusement entraîné la prolifération de fraudes. Une fraude répandue est appelée hameçonnage (« phishing »). Cette forme de piratage informatique est utilisée par des fraudeurs pour tenter de récupérer des informations (généralement bancaires) auprès d'internautes, par l'exploitation en dupant les internautes par le biais d'un courrier électronique semblant provenir d'une entreprise de confiance, typiquement une banque ou un site de commerce.

Le mail envoyé par ces pirates usurpe l'identité d'une entreprise (banque, site de commerce électronique, etc.) et les invite à se connecter en ligne par le biais d'un lien hypertexte et de mettre à jour des informations les concernant dans un formulaire d'une page web factice, copie conforme du site original, en prétextant par exemple une mise à jour du service, une intervention du support technique, etc.

Ainsi, par le biais du formulaire, les pirates réussissent à obtenir les identifiants et mots de passe des internautes ou bien des données personnelles ou bancaires (numéro de client, numéro de compte en banque, etc.).

Grâce à ces données les pirates sont capables de transférer directement l'argent sur un autre compte ou bien d'obtenir ultérieurement les données nécessaires en utilisant intelligemment les données personnelles ainsi collectées.

### Etat de la technique

Pour contrer ce type de fraude on connaît dans l'état de la technique différentes solutions.

Certains logiciels de navigation incluent des dispositifs de protection : un serveur central recense tous les jours les nouveaux sites d'hameçonnage et communique cette liste aux navigateurs installés sur les ordinateurs des internautes qui sont alors à même d'alerter les utilisateurs qui viendraient à se connecter sur ces sites frauduleux.

Lorsque la fonction protection est activée, le navigateur télécharge une liste des sites identifiés comme hébergeant des scripts d'hameçonnage et la compare en permanence aux sites sur lesquels l'internaute surfent. Cela permet à un serveur associé au navigateur de connaître en temps réel, les nouveaux sites et de lancer des alertes très efficaces. La liste est mise à jour automatiquement sans intervention de l'utilisateur. Mais, comme des sites apparaissent en quelques minutes, ce dispositif est complété par un système de vérification expresse par l'utilisateur lui-même qui vérifie qu'un site suspect fait ou non partie de la liste qui a été téléchargée.

Certaines barres d'outils de navigateurs intègrent une protection contre l'hameçonnage par l'envoi à un serveur central la liste de tous les sites visités et pour les comparer avec les sites d'hameçonnage.

On connaît également la solution décrite dans le brevet européen EP1103935 proposant l'utilisation combinée d'au moins deux réseaux de communication et plus précisément l'échange d'information confidentielle à un usager d'un premier support d'information à l'aide d'un deuxième support d'information par l'intermédiaire d'un mécanisme de synchronisation des supports d'information et de renvoi d'information d'un support à l'autre. Le procédé de transmission d'information sur un premier support comporte ainsi : une opération d'ouverture d'une session de communication avec un moyen de communication situé à distance, sur ledit premier support de communication, et, durant ladite session : une opération de réception d'une information confidentielle sur un terminal à adresse unique sur un deuxième support de communication, et une opération de transmission, sur le premier support de communication, d'un message confidentiel représentant l'information confidentielle, une opération pour vérifier si le message confidentiel correspond à l'information confidentielle.

On connaît aussi la demande de brevet US20110219427 décrivant un procédé pour simplifier un processus d'authentification du point de vue d'un utilisateur tout en offrant une sécurité améliorée aux nombreux utilisateurs utilisant actuellement des techniques de sécurité faibles ou inexistantes. Lors de la connexion à un site Web hébergé par un serveur Web, une session commence par un utilisateur se connectant et se connectant avec un appareil, tel qu'un ordinateur personnel. Plutôt qu'une approche par nom d'utilisateur et mot de passe, l'ordinateur personnel communique avec un autre appareil utilisateur, tel qu'un téléphone intelligent. Le téléphone intelligent communique en toute sécurité avec un serveur d'authentification qui informe le serveur Web si l'utilisateur a été authentifié ou non.

### Inconvénients de l'art antérieur

Les solutions basées sur la consultation d'une liste de site d'hameçonnage ne sont pas totalement efficace car ils ne prennent pas en compte les sites les plus récents qui n'ont pas encore été qualifiés et enregistrés dans la base, et les cyberfraudeurs ont développé des stratégies de changements très rapide des adresses des sites d'hameçonnage.

La solution proposée par le brevet EP1103935 n'est pas non plus satisfaisante car son utilisation est fastidieuse et la vérification est postérieure à la transmission d'informations sensibles.

### Solution apportée par l'invention

Afin de remédier à ces inconvénients, la présente invention propose un procédé selon la revendication indépendante 1, une variante selon la revendication dépendante 2 et un mode de mise en oeuvre particulier selon la revendication dépendante 3.

Pour la présente invention, on entend par «équipement » un dispositif matériel connecté tel qu'une tablette ou un téléphone cellulaire exécutant des applications logicielles ainsi que des formes dématérialisées sous forme d'applications logicielles.

Pour l'opération d'acquisition dudit code numérique aléatoire horodaté CXa, elle peut être effectuée à partir de deux terminaux distincts ou à partir de deux applications logicielles exécutées sur un même terminal.

### Description détaillée d'un exemple non limitatif de l'invention

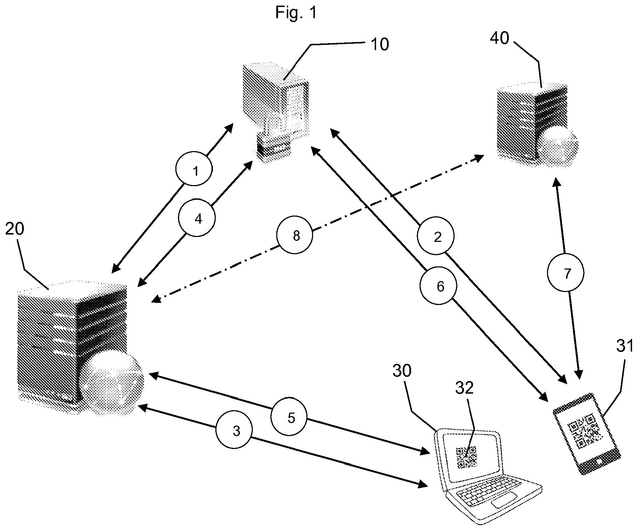

La présente invention sera mieux décrite à la lecture de la description qui suit, concernant un exemple non limitatif de réalisation où la figure 1 représente une vue schématique d'un système pour la mise en oeuvre de l'invention.

Le système met en oeuvre un serveur de confiance (10) comportant une mémoire pour l'enregistrement de serveurs transactionnels (20) vérifiés.

L'étape d'enregistrement (1) est réalisée par l'ouverture d'une session entre un serveur marchand (20) et le serveur de confiance (10) attribuant au serveur marchand (20) un identifiant de session et enregistrement des informations relatives au site dont la sécurisation est attendue. Ces informations contiennent notamment un identifiant du site, par exemple l'adresse URL racine, l'adresse physique Mac (Media Access Control1), l'adresse IP et/ou toute autre information d'identification du site.

Préalablement à l'enregistrement, une vérification de l'authenticité de ces informations est effectuée de manière connue. Le serveur de confiance (10) calcule ensuite une clé unique ou une clé de chiffrement unique, associée à l'identifiant du site validé. Cette clé est enregistrée sur le serveur marchand (20).

L'utilisateur qui souhaite vérifier l'authenticité du site télécharge dans la mémoire d'un terminal connecté (31) par une opération (2) une application logicielle depuis le serveur de confiance (10), éventuellement par l'intermédiaire d'un serveur d'applications. Lors de cette opération, le serveur de confiance (10) peut optionnellement prévoir un échange de messages pour l'enregistrement d'informations spécifiques à l'utilisateur, et transmettre un identifiant de session ou un cookie qui sera enregistré sur le terminal connecté (31) de l'utilisateur.

Lorsque l'utilisateur se connecte à un site avec un équipement connecté (30), par exemple par l'intermédiaire d'un moteur de recherche ou de la saisie de l'adresse dans la barre du navigateur ou encore par l'activation d'un lien hypertexte, il ouvre de façon habituelle une session (3) avec le serveur (20) hébergeant le site correspondant à l'adresse considérée.

S'il s'agit d'un site préalablement enregistré sur le serveur de confiance, le serveur (20) ouvre une session (4) via la clé qui lui a été attribuée par le serveur de confiance (10) lors de l'enregistrement initial.

Le serveur de confiance (10) calcule alors un code numérique aléatoire horodaté, qui est transmis au serveur (20) et qui est alors intégré dans la page du site correspondant à l'adresse considérée. Ce code peut prendre la forme d'un code matriciel de type Qr code. Le fichier html correspondant à la page intégrant ce code est transmis par une étape (5) à l'équipement (30) qui commande l'affichage de la page intégrant le code visualisé sous une forme graphique (32).

Ce code graphique (32) est flashé à l'aide de l'équipement (31), distinct de l'équipement (30) qui a établi la session avec le serveur (20).

L'acquisition du code (32) par l'activation de l'application préalablement installée sur l'équipement (31) ouvre une session (6) avec le serveur de confiance (10) et la transmission par l'équipement (31) du code flashé. Le serveur de confiance (10) compare le code transmis avec les codes générés pendant la tranche temporelle de validité et en cas de succès, transmet à l'équipement (31) un message numérique comportant un indicateur de conformité, par exemple un code commande une plage colorée d'une première couleur, ainsi que des informations enregistrées en relation avec l'identifiant du site associé au code (31).

L'utilisateur peut ainsi obtenir la confirmation que le site consulté est authentique.

Dans le cas d'un site frauduleux, le code éventuellement simulé par le fraudeur sera acquis par l'équipement (31) et transmis au serveur, et conduira à un traitement de vérification infructueux, ce qui déclenchera l'envoi d'un message numérique d'alerte.

Le message numérique envoyé en cas de conformité peut aussi contenir un lien hypertexte dont l'activation commande l'ouverture d'une session (7) avec un serveur tiers (40), par exemple un serveur de paiement, pour la réalisation d'une transaction sécurisée.

Contrairement à une base de données ou un système de fichiers, la session conserve les informations pendant quelques minutes. Cette durée dépend de la configuration du serveur mais est généralement fixée à 24 minutes par défaut. Le serveur crée des fichiers stockés dans un répertoire particulier.

Les sessions sont particulièrement utilisées pour ce type d'applications :
Les espaces membres et accès sécurisés avec authentification.
- Gestion d'un caddie sur un site de vente en ligne.
- Formulaires éclatés sur plusieurs pages.
- Stockage d'informations relatives à la navigation de l'utilisateur (thème préféré, langues...).

Le principe de l'invention est de séparer la validation d'un site, d'un produit sur un site et la page de paiement.

Pour cela il créer un chaînage au minimum de deux codes numériques permet de certifier auprès du demandeur que le code à une direction et une propriété précise dont il peut vérifier les informations.

Cette solution supprime l'effet « attaque de l'homme du milieu (HDM) ou « middle man attack » en créant une rupture dans la logique de communication web. L'attaque de l'homme du milieu (HDM) ou man in the middle attack (MITM) est une attaque qui a pour but d'intercepter les communications entre deux parties, sans que ni l'une ni l'autre ne puisse se douter que le canal de communication entre elles a été compromis. Le canal le plus courant est une connexion à Internet de l'internaute. L'attaquant doit d'abord être capable d'observer et d'intercepter les messages d'une victime à l'autre. L'attaque « homme du milieu » est particulièrement applicable dans la méthode d'échange de clés Diffie-Hellman, quand il est utilisé sans authentification. Avec authentification, Diffie-Hellman est en revanche invulnérable aux écoutes du canal, et est d'ailleurs conçu pour cela.

La solution selon l'invention prévoit le téléchargement d'une application depuis une plateforme de téléchargement sécurisée et de confiance sur un équipement connecté, par exemple une tablette ou un téléphone cellulaire.

Cette application une fois chargé lui donne la possibilité de scanner les codes qui son activés à sa demande pour certifier.

Les codes uniques créés par le serveur de confiance à chaque demande du serveur web retourne sur le site pour qu'ils soient affichés.

Pour le demandeur il lui suffit de scanner le code avec l'équipement connecté chargé de l'application téléchargée.

L'information scanné est dirigé vers le serveur de confiance qui certifie en premier lieu le code et prend en compte les informations qu'il a dans sa base

Il retourne vers le demandeur un certificat associé à différents types d'informations les détails de l'appartenance du code (url du site, produit, validation de la marque et du site (code trust), url de paiement.

## Revendications

1. Procédé de transmission d'une information numérique d'un serveur informatique SMa (marchand 20) vers un premier équipement connecté EAU1 (utilisateur U1 30) **caractérisé en ce qu'**il comporte :
• Des étapes initiales comprenant :
∘ Une opération d'enregistrement d'un identifiant d'un site dudit serveur informatique SMa unique audit serveur informatique
∘ Une opération de calcul par un serveur de confiance (10) d'une clé associée à ledit identifiant
∘ Une opération d'enregistrement de ladite clé audit serveur informatique SMa
∘ Une opération d'enregistrement sur un second équipement connecté EBU1 du même utilisateur U1 d'une application logicielle depuis ledit serveur de confiance (10), commandant l'ouverture automatique d'une session informatique avec ledit serveur de confiance (10) lors de la lecture d'un code présenté sur ledit équipement connecté EAU1,
• Des étapes de validation d'une information présentée sur ledit premier équipement connecté EAU1 comprenant :
∘ Une opération d'ouverture d'une session de communication par ledit premier équipement connecté EAU1 avec un serveur informatique SMa
∘ Une opération d'ouverture d'une première session de communication sécurisé par ledit serveur informatique SMa avec ledit serveur de confiance (10) via ladite clé
∘ Une opération de calcul par ledit serveur de confiance d'un code numérique aléatoire horodaté CXa associé ladite clé ; le code numérique aléatoire horodaté CXa est alors transmis audit serveur informatique SMa et intégré sur une page dudit site
∘ Une opération de transmission par le serveur SMa ladite page intégrant ledit code numérique aléatoire horodaté CXa audit équipement connecté EAU1,
∘ Une opération d'affichage dudit code numérique aléatoire horodaté CXa par ledit premier équipement connecté EAU1
∘ Une opération d'acquisition dudit code numérique aléatoire horodaté CXa présenté par ledit premier équipement connecté EAU1 par ledit second équipement connecté EBU1,
∘ Une opération d'ouverture d'une seconde session de communication par ledit second équipement connecté EBU1 avec ledit serveur de confiance (10) par l'intermédiaire de ladite application préalablement chargée et de transmission dudit code numérique aléatoire horodaté CXa acquis audit serveur de confiance (10)
∘ Une opération de comparaison par le serveur de confiance (10) dudit code numérique aléatoire horodaté CXa transmis audit serveur de confiance (10) avec ledit code numérique aléatoire horodaté CXa calculé par ledit serveur de confiance (10)
∘ Une opération de transmission audit second équipement connecté EBU1 par ledit serveur de confiance (10) d'un message numérique de validation MVa comprenant un indicateur de conformité du code numérique aléatoire horodaté CXa transmis audit serveur de confiance (10) avec le code numérique aléatoire horodaté CXa calculé par ledit serveur de confiance et une information Iva relative au serveur SMa associé au code numérique aléatoire horodaté CXa.

2. Procédé de transmission d'une information numérique dudit serveur informatique SMa (marchand) vers un premier équipement connecté EAU1 (utilisateur U1) selon la revendication 1 **caractérisé en ce que** ledit message numérique de validation MVa comprend en outre un lien pour l'ouverture d'une session sécurisé vers un serveur tiers (40) dont l'adresse est calculée par le serveur de confiance en fonction des informations enregistrées associées au serveur SMa.

3. Procédé de transmission d'une information numérique dudit serveur informatique SMa (marchand) vers un premier équipement connecté EAU1 (utilisateur U1) selon la revendication précédente **caractérisé en ce que** ledit serveur tiers (40), dont l'adresse est calculée par le serveur de confiance en fonction des informations enregistrées associées au serveur SMa, est un servert (de paiement) SMp distinct du serveur SMa.

## Patentansprüche

1. Verfahren zum Übertragen digitaler Informationen eines Computerservers SMa (Händler 20) zu einer ersten verbundenen Einrichtung EAU1 (Benutzer U1 30), **dadurch gekennzeichnet, dass** es aufweist:
• Anfangsschritte, umfassend:
∘ einen Vorgang zum Speichern einer Kennung einer Webseite des Computerservers SMa, die eindeutig dem Computerserver zugeordnet ist
∘ einen Vorgang zum Berechnen durch einen vertrauenswürdigen Server (10) eines Schlüssels, der mit der Kennung verknüpft ist
∘ einen Vorgang zum Speichern des Schlüssels in dem Computerserver SMa
∘ einen Vorgang zum Speichern auf einer zweiten verbundenen Einrichtung EBU1 des gleichen Benutzers U1 einer Softwareanwendung von dem vertrauenswürdigen Server (10), wobei die automatische Eröffnung einer Computersitzung mit dem vertrauenswürdigen Server (10) bei dem Lesen eines Codes gesteuert wird, der auf der verbundenen Einrichtung EAU1 dargestellt ist,
• Schritte zum Validieren von Informationen, die auf der ersten verbundenen Einrichtung EAU1 dargestellt sind, umfassend:
∘ einen Vorgang zum Eröffnen einer Kommunikationssitzung durch die erste verbundene Einrichtung EAU1 mit einem Computerserver SMa
∘ einen Vorgang zum Eröffnen einer ersten geschützten Kommunikationssitzung durch den Computerserver SMa mit dem vertrauenswürdigen Server (10) über den Schlüssel
∘ einen Vorgang zum Berechnen durch den vertrauenswürdigen Server eines zufälligen zeitgestempelten digitalen Codes CXa, der mit dem Schlüssel verknüpft ist; wobei der zufällige zeitgestempelte digitale Code CXa dann an den Computerserver SMa übertragen und auf einer Seite der Webseite eingebunden wird
∘ einen Vorgang zum Übertragen durch den Server SMa der Seite, die den zufälligen zeitgestempelten digitalen Code CXa einbindet, an die verbundene Einrichtung EAU1,
∘ einen Vorgang zum Anzeigen des zufälligen zeitgestempelten digitalen Codes CXa durch die erste verbundene Einrichtung EAU1
∘ einen Vorgang zum Erfassen des zufälligen zeitgestempelten digitalen Codes CXa durch die erste verbundene Einrichtung EAU1 durch die zweite verbundene Einrichtung EBU1,
∘ einen Vorgang zum Eröffnen einer zweiten Kommunikationssitzung durch die zweite verbundene Einrichtung EBU1 mit dem vertrauenswürdigen Server (10) über die zuvor geladene Anwendung und zum Übertragen des erfassten zufälligen zeitgestempelten digitalen Codes CXa an den vertrauenswürdigen Server (10)
∘ einen Vorgang zum Vergleichen durch den vertrauenswürdigen Server (10) des zufälligen zeitgestempelten digitalen Codes CXa, der an den vertrauenswürdigen Server (10) übertragen wird, mit dem zufälligen zeitgestempelten digitalen Code CXa, der durch den vertrauenswürdigen Server (10) berechnet wird
∘ einen Vorgang zum Übertragen an die zweite verbundene Einrichtung EBU1 durch den vertrauenswürdigen Server (10) einer digitalen Validierungsnachricht MVa, umfassend einen Indikator einer Übereinstimmung des zufälligen zeitgestempelten digitalen Codes CXa, der an den vertrauenswürdigen Server (10) übertragen wird, mit dem zufälligen zeitgestempelten digitalen Code CXa, der durch den vertrauenswürdigen Server berechnet wird, und Informationen Iva, die sich auf den Server SMa beziehen, der mit dem zufälligen zeitgestempelten digitalen Code CXa verknüpft ist.

2. Verfahren zum Übertragen digitaler Informationen des Computerservers SMa (Händler) zu einer ersten verbundenen Einrichtung EAU1 (Benutzer U1) nach Anspruch 1, **dadurch gekennzeichnet, dass** die digitale Validierungsnachricht MVa ferner einen Link für die Eröffnung einer geschützten Sitzung zu einem Server (40) eines Drittanbieters umfasst, dessen Adresse durch den vertrauenswürdigen Server in Abhängigkeit von gespeicherten Informationen berechnet wird, die mit dem Server SMa verknüpft sind.

3. Verfahren zum Übertragen digitaler Informationen des Computerservers SMa (Händler) zu einer ersten verbundenen Einrichtung EAU1 (Benutzer U1) nach dem vorstehenden Anspruch, **dadurch gekennzeichnet, dass** der Server (40) des Drittanbieters, dessen Adresse durch den vertrauenswürdigen Server in Abhängigkeit von den gespeicherten Informationen berechnet wird, die mit dem Server SMa verknüpft sind, ein Server (einer Bezahlung) SMp ist, der sich von dem Server SMa unterscheidet.

## Claims

1. Method for sending digital information from a computer server SMa (merchant 20) to a first connected device EAU1 (user U1 30), **characterized in that** it comprises:
• initial steps, comprising:
∘ an operation in which an identifier of a site of said computer server SMa unique to said computer server is registered
∘ an operation in which a key associated with said identifier is calculated by a trusted server (10)
∘ an operation in which said key is registered to said computer server SMa
∘ an operation in which a software application from said trusted server (10), which application controls the automatic opening of a computer session with said trusted server (10) when a code provided on said connected device EAU1 is read, is registered on a second connected device EBU1 of the same user U1
• steps for validating information provided on said first connected device EAU1, comprising:
∘ an operation in which a communication session is opened by said first connected device EAU1 with a computer server SMa
∘ an operation in which a first communication session that is secured by said computer server SMa is opened with said trusted server (10) via said key
∘ an operation in which a time-stamped random digital code CXa associated with said key is calculated by said trusted server; the time-stamped random digital code CXa is then sent to said computer server SMa and built into a page of said site
∘ an operation in which said page with said time-stamped random digital code CXa built in is sent to said connected device EAU1 by the server SMa
∘ an operation in which said time-stamped random digital code CXa is displayed by said first connected device EAU1
∘ an operation in which said time-stamped random digital code CXa provided by said first connected device EAU1 is acquired by said second connected device EBU1
∘ an operation in which a second communication session is opened by said second connected device EBU1 with said trusted server (10) via said pre-loaded application and said acquired time-stamped random digital code CXa is sent to said trusted server (10)
∘ an operation in which said time-stamped random digital code CXa sent to the trusted server (10) is compared, by said trusted server (10), with said time-stamped random digital code CXa calculated by said trusted server (10)
∘ an operation in which said trusted server (10) sends, to said second connected device EBU1, a digital validation message Mva including an indicator that the time-stamped random digital code CXa sent to said trusted server (10) is consistent with the time-stamped random digital code CXa calculated by said trusted server, and a piece of information Iva relating to the server SMa associated with the time-stamped random code Cxa.

2. Method for sending digital information from said computer server SMa (merchant) to a first connected device EAU1 (user U1) according to claim 1, **characterized in that** said digital validation message MVa also includes a link for opening a secure session to a third-party server (40), the address of which is calculated by the trusted server on the basis of the registered information associated with the SMa server.

3. Method for sending digital information from said computer server SMa (merchant) to a first connected device EAU1 (user U1) according to the preceding claim, **characterized in that** said third-party server (40), the address of which is calculated by the trusted server on the basis of the registered information associated with the SMa server, is a (payment) server SMp which is separate from the SMa server.
